Europäisches Patentamt

European Patent Office

Office européen des brevets

(19)

(11) **EP 1 111 394 A1**

(12) **EUROPÄISCHE PATENTANMELDUNG**

(43) Veröffentlichungstag:
  **27.06.2001 Patentblatt 2001/26**

(51) Int Cl.⁷: **G01P 3/56**, G01P 3/60,
  G01L 5/10

(21) Anmeldenummer: **00125946.4**

(22) Anmeldetag: **28.11.2000**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(30) Priorität: **08.12.1999  DE 19959096**

(71) Anmelder: **ROBERT BOSCH GMBH**
  **70442 Stuttgart (DE)**

(72) Erfinder:
  • **Kutteruf, Karl-Martin**
   **73272 Neidlingen (DE)**
  • **Lehmann, Siegfried**
   **73061 Ebersbach (DE)**

(54) **Anordnung zur Ermittlung des Schlupfes bzw. der Keilriemenspannung bei einem Verbrennungsmotor**

(57)   Die Erfindung beschreibt eine Anordnung und ein Verfahren zur Ermittlung des Schlupfes bzw. der Keilriemenspannung bei einem Verbrennungsmotor (1), an welchen ein elektrischer Generator (7) über einen Keilriemen (4) antriebsmäßig angekoppelt ist. Ein Drehzahlsensor (8) misst die Drehzahl des Verbrennungsmotors und Mittel (10) zur Feststellung der Drehzahl des Generators geben dessen Drehzahl an. Beide Drehzahlen werden einem Mittel zur Vergleichsberechnung (12) zugeführt, in welchem zur Vergleichsberechnung entweder eine Auswertung aufgrund einer Veränderung der Last am Generator oder aufgrund einer Veränderung der Drehzahl am Verbrennungsmotor vorgenommen wird, um den Schlupf bzw. die Keilriemenspannung zu messen. Der gemessene Wert kann auf einer Anzeige (15) angezeigt werden. Bei der Auswertung aufgrund von Lastveränderung führt das Mittel (12) zur Vergleichsberechnung eine erste Auswertung bei einer ersten Last des Generators und eine zweite Auswertung bei einer zweiten Last des Generators durch, wobei in beiden Fällen der Verbrennungsmotor gleiche Drehzahl aufweist. Bei der Auswertung aufgrund von Drehzahlveränderung führt das Mittel (12) zur Vergleichsberechnung eine erste Auswertung bei einer ersten Drehzahl des Verbrennungsmotors und eine zweite Auswertung bei einer zweiten Drehzahl des Verbrennungsmotors durch, wobei in beiden Fällen der Generator mit gleicher Last beaufschlagt ist. Statt der vom Drehzahlsensor gemessenen Drehzahl kann alternativ eine von der Motorsteuerung vorgegebene Drehzahl verwendet werden.

FIG. 1

EP 1 111 394 A1

**Beschreibung**

Stand der Technik

Die Erfindung geht aus von einer Anordnung zur Ermittlung des Schlupfes bzw. der Keilriemenspannung bei einem Verbrennungsmotor, an welchen eine elektrischer Generator über einen Keilriemen antriebsmäßig angekoppelt ist, gemäß der im Oberbegriff des Anspruchs 1 definierten Gattung.

Bei der Ermittlung der richtigen Keilriemenspannung, die ein Keilriemen aufweist, der einen Verbrennungsmotor mit von ihm angetriebenen Aggregaten, insbesondere eine Lichtmaschine oder ein Generator verbindet, ist es heute üblich, die Keilriemenspannung durch mechanische Mittel, wie Eindrücken auf einer bestimmten Länge um einen bestimmten Betrag, zu ermitteln. Die Keilriemenspannung wird also durch mechanische Riemenspannungsmesser festgestellt. Nachteilig dabei ist es, dass im allgemeinen Abdeckungen entfernt werden müssen und dabei zusätzlicher Aufwand bei Wartungsarbeiten oder bei sonstigen Tests notwendig ist.

Aus der EP 0 267 087 A1 ist eine Anordnung zur Schlupfmessung zwischen einem Verbrennungsmotor und einem von ihm über einen von diesem angetriebenen Generator bekannt. Dabei wird die momentane Drehzahl des Verbrennungsmotors und die momentane Drehzahl des Generators über separate Drehzahlmesser ermittelt und in einer Vergleichsschaltung jeweils mit einem Referenzwert verglichen. Aus dem ermittelten Vergleichswert wird der Schlupf in einer recht aufwendigen Schaltungsanordnung ermittelt und angezeigt. Diese Anordnung dient insbesondere der Anzeige des Bruchs des Keilriemens und des Ausfalls des Generators in Kraftfahrzeugen. Eine Anwendung im Hinblick auf die Ermittlung der tatsächlichen bzw. korrekten Spannung des Keilriemens liegt hier nicht vor und erscheint auch nicht angedeutet.

Aufgabe vorliegender Erfindung ist es, die Keilriemenspannung anhand der Feststellung des Schlupfs zwischen dem Verbrennungsmotor und dem von ihm angetriebenen Generator auf dynamische Weise zu messen, wodurch auf die vorhandene Keilriemenspannung geschlossen werden kann, um diese gegebenenfalls auf den richtigen Wert einzustellen.

Vorteile der Erfindung

Die erfindungsgemäße Anordnung zur Ermittlung des Schlupfes bzw. der Keilriemenspannung bei einem Verbrennungsmotor mit den kennzeichnenden Merkmalen des Anspruchs 1 hat gegenüber den bekannten mechanischen Riemenspannungsmessvorrichtungen den Vorteil, dass der Schlupf dynamisch gemessen wird, ohne dass Abdeckungen entfernt werden müssen. Gegenüber der bekannten elektrischen Schlupfmessung besteht der Vorteil in der Bereitstellung einer nach anderen, vorteilhaften Prinzipien arbeitenden Anordnung, die darüber hinaus weniger Aufwand erfordert und zur Ermittlung der Keilriemenspannung Verwendung findet.

Diese Vorteile werden durch die Erfindung prinzipiell dadurch erreicht, dass Mittel zur Feststellung der Drehzahl des Verbrennungsmotors und Mittel zur Feststellung der Drehzahl des Generators vorgesehen sind, sowie Mittel zur Vergleichsberechnung vorgesehen sind und Mittel zur Anzeige bzw. Registrierung des ermittelten Schlupfes, wobei zur Vergleichsberechnung entweder eine Auswertung aufgrund einer Veränderung der Last am Generator oder aufgrund einer Veränderung der Drehzahl am Verbrennungsmotor vorgesehen ist.

Durch die in den weiteren Ansprüchen niedergelegten Maßnahmen sind vorteilhafte Weiterbildungen und Verbesserungen der im Anspruch 1 angegebenen Anordnung möglich.

Nach einer ersten besonders zweckmäßigen Weiterbildung der Erfindung, bei der Auswertung aufgrund von Lastveränderung, führt das Mittel zur Vergleichsberechnung eine erste Auswertung bei einer ersten Last des Generators und eine zweite Auswertung bei einer zweiten Last des Generators durch, wobei in beiden Fällen der Verbrennungsmotor gleiche Drehzahl aufweist.

Nach einer zweiten besonders zweckmäßigen Ausgestaltung der Erfindung ist vorgesehen, dass bei der Auswertung aufgrund von Drehzahlveränderung das Mittel zur Vergleichsberechnung eine erste Auswertung bei einer ersten Drehzahl des Verbrennungsmotors und eine zweite Auswertung bei einer zweiten Drehzahl des Verbrennungsmotors durchführt, wobei in beiden Fällen der Generator mit gleicher Last beaufschlagt ist.

In vorteilhafter Ausgestaltung der erfindungsgemäßen Anordnung ist als Mittel zur Vergleichsberechnung eine Mikroprozessor vorgesehen. Dadurch ist eine sehr flexible und an die Verhältnisse anpassbare und kostengünstige Auswertung möglich.

Die Erfindung betrifft weiterhin ein Verfahren zur Ermittlung des Schlupfes bzw. der Keilriemenspannung bei einem Verbrennungsmotor, an welchen ein elektrischer Generator über einen Keilriemen antriebsmäßig angekoppelt ist. Gemäß der Erfindung ist bei diesem Verfahren vorgesehen, dass eine Vergleichsberechnung durchgeführt wird, welcher entweder eine Auswertung aufgrund einer Veränderung der Last am Generator oder aufgrund einer Veränderung der Drehzahl des Verbrennungsmotors zugrunde liegt.

In vorteilhafter Ausgestaltung einer ersten Auswertungsmethode entsprechend dem erfindungsgemäßen Verfahren ist dabei vorgesehen, dass bei der Auswertung aufgrund einer Veränderung der Last am Generator in einem ersten Schritt bei einer festen Drehzahl des Verbrennungsmotors dessen Drehzahl und die Drehzahl des Generators gemessen, festgestellt und gespeichert wird, dann danach bei gleicher Drehzahl des Verbrennungsmotors dem Generator eine Last zugeschaltet wird und in einem zweiten Schritt die Drehzahl des Generators gemessen, festgestellt und gespeichert wird, in einem dritten Schritt aus den beiden Generatordrehzahlen und der Drehzahl des Verbrennungsmotors der Schlupf in an sich bekannter Weise berechnet und das berechnete Ergebnis gegebenenfalls angezeigt wird.

In einer zweiten vorteilhaften Auswertungsmethode entsprechend dem erfindungsgemäßen Verfahren ist in vorteilhafter Weise vorgesehen, dass bei der Auswertung aufgrund einer Veränderung der Drehzahl am Verbrennungsmotor in einem ersten Schritt bei einer festen Last am Generator dessen Drehzahl und die Drehzahl des Verbrennungsmotors gemessen, festgestellt und gespeichert wird, dann danach bei gleicher fester Last am Generator die Drehzahl des Verbrennungsmotors verändert, insbesondere erhöht, wird und in einem zweiten Schritt die Drehzahl sowohl des Generators als auch des Verbrennungsmotors gemessen, festgestellt und gespeichert wird, und in einem dritten Schritt aus den beiden Generatordrehzahlen und den Drehzahlen des Verbrennungsmotors der Schlupf in an sich bekannter Weise durch Verhältnisbildung berechnet und das berechnete Ergebnis gegebenenfalls angezeigt wird.

In weiterer vorteilhafter Ausgestaltung der erfindungsgemäßen Anordnung und des erfindungsgemäßen Verfahrens ist vorgesehen, dass die Drehzahl des Generators über die Generatorrestwelligkeit mittels Frequenz-Drehzahl-Wandlung gemessen und festgestellt wird. Des Weiteren wird in vorteilhafter Ausgestaltung des erfindungsgemäßen Verfahrens oder der erfindungsgemäßen Anordnung die Drehzahl des Verbrennungsmotors durch einen separaten Drehzahlsensor gemessen und festgestellt.

In weiterer vorteilhafter, alternativer Ausgestaltung der erfindungsgemäßen Anordnung und des erfindungsgemäßen Verfahrens ist vorgesehen, dass anstelle der vom Mittel zur Feststellung der Drehzahl des Verbrennungsmotors festgestellten Drehzahl eine Drehzahl des Verbrennungsmotors verwendet wird, welche von der Motorsteuerung bzw. dem Motormanagement des Verbrennungsmotors selbsttätig zur Verfügung gestellt bzw. bei bestimmten Vorgängen eingestellt wird, insbesondere die Leerlaufdrehzahl oder die Abregeldrehzahl oder eine andere bestimmte Referenzdrehzahl. Auf diese Weise wird kein separater Drehzahlsensor benötigt.


Zeichnung

Die Erfindung ist anhand eines in der Zeichnung dargestellten Ausführungsbeispieles für eine Anordnung in der nachfolgenden Beschreibung näher erläutert. Die einzige Figur zeigt schematisch in einem Blockschaltbild in einem Ausführungsbeispiel den Aufbau der erfindungsgemäßen Anordnung zur Ermittlung des Schlupfes bzw. der Keilriemenspannung bei einem Verbrennungsmotor.


Beschreibung der Ausführungsbeispiele

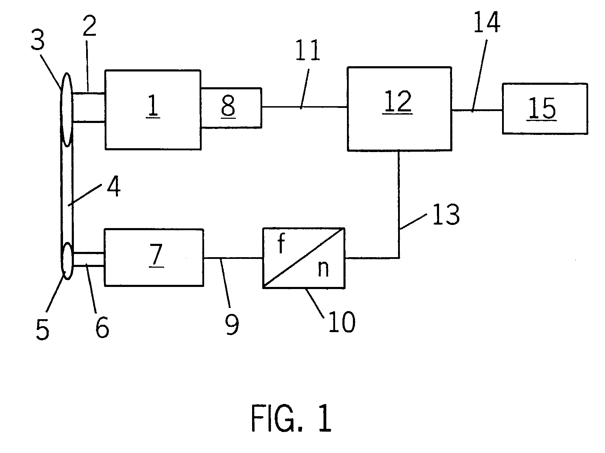

In Figur 1 ist schematisch in einem Blockschaltbild der beispielhafte Aufbau der erfindungsgemäßen Anordnung zur Ermittlung des Schlupfes bzw. der Keilriemenspannung bei einem Verbrennungsmotor, an den ein elektrischer Generator über einen Keilriemen antriebsmäßig angekoppelt ist, dargestellt. Ein Verbrennungsmotor 1 treibt über eine Welle 2 eine Keilriemenscheibe 3, die über einen Keilriemen 4 mit einer Keilriemenscheibe 5 eine Welle 6 eines Generators 7 verbunden ist. Somit treibt der Verbrennungsmotor 1 über den Keilriemen 4 den Generator 7 an. Am Verbrennungsmotor 1 ist ein Drehzahlsensor 8 zur Feststellung der Drehzahl des Verbrennungsmotors 1 vorgesehen. Des Weiteren wird aus einem Signal des Generators 7, beispielsweise über die Generatorrestwelligkeit, die auf einer Leitung 9 einem Frequenz-Drehzahl-Wandler 10 zugeführt wird, die Drehzahl des Generators 7 festgestellt. Die Drehzahl des Verbrennungsmotors 1, festgestellt vom Drehzahlsensor 8, wird auf einer Leitung 11 einem Mittel zur Vergleichsberechnung 12 zugeführt. Diesem Mittel zur Vergleichsberechnung 12 wird auf einer Leitung 13 auch das Ausgangssignal des Frequenz-Drehzahl-Wandlers 10 zugeführt und damit steht dem Mittel zur Vergleichsberechnung 12 auf den Eingangsleitungen 11 die Drehzahl des Verbrennungsmotors 1 und auf der Leitung 13 die Drehzahl des vom Verbrennungsmotor 1 über den Keilriemen 4 angetriebenen Generators 7 zur Verfügung. Über eine Ausgangsleitung 14 wird auf einer Anzeige 15 der vom Mittel zur Vergleichsberechnung 12 ermittelte Schlupf angezeigt. Er kann dort gegebenenfalls auch gespeichert werden, damit er für andere Zwecke zur Verfügung steht.

In weiterer vorteilhafter, alternativer Ausgestaltung der erfindungsgemäßen Anordnung und des erfindungsgemäßen Verfahrens ist vorgesehen, dass anstelle der vom Mittel 8 zur Feststellung der Drehzahl des Verbrennungsmotors, insbesondere alternativ zu der vom Drehzahlsensor 8 festgestellten Drehzahl, eine Drehzahl des Verbrennungsmotors verwendet wird, welche von der Motorsteuerung bzw. dem Motormanagement des Verbrennungsmotors selbsttätig zur Verfügung gestellt bzw. bei bestimmten Vorgängen eingestellt wird. Dies kann insbesondere die Leerlaufdrehzahl oder die Abregeldrehzahl, also die Drehzahl ab welcher durch die Motorsteuerung eine höhere Drehzahl verhindert wird, sein. Es kann aber auch eine andere bestimmte Referenzdrehzahl sein, welche vom Motormanagement in bestimmten Situationen bereitgestellt werden. Auf diese Weise wird kein separater Drehzahlsensor benötigt.

Das der Erfindung zugrunde liegende Verfahren zur Ermittlung des Schlupfes bzw. der Spannung des Keilriemens 4, der den Verbrennungsmotor 1 mit dem Generator 7 verbindet, besteht im Kern darin, dass eine Vergleichsberechnung durchgeführt wird, der entweder eine Auswertung aufgrund einer Veränderung der Last am Generator 7 oder aufgrund einer Veränderung der Drehzahl des Verbrennungsmotors 1 zugrunde liegt.

Bei dem ersten Auswertungsverfahren, welches aufgrund einer Veränderung der Last am Generator 7 vorgenommen wird, wird in einem ersten Schritt bei einer festen Drehzahl des Verbrennungsmotors 1, beispielsweise der Leerlaufdrehzahl, die Drehzahl des Verbrennungsmotors 1 und die des Generators 7 gemessen. Diese wird auch festgestellt durch die Signalverarbeitung im Mittel zur Vergleichsberechnung 12 und kann gespeichert werden. Dann wird danach bei gleicher Drehzahl des Verbrennungsmotors 1 dem Generator 7 eine Last zugeschaltet und in einem zweiten Schritt die Drehzahl des Generators 7 gemessen, festgestellt und gespeichert. In einem dritten Schritt wird aus den beiden Generatordrehzahlen und der Drehzahl des Verbrennungsmotors 1 der Schlupf in an sich bekannter Weise durch die Mittel zur Vergleichsberechnung 12, im allgemeinen ein Mikroprozessor, der die Signalverarbeitung vornimmt, in an sich bekannter Weise berechnet. Das berechnete Ergebnis des Schlupfes wird auf der Anzeige 15 angezeigt. Dieses Ergebnis kann dazu benutzt werden, um den Keilriemen 4, falls notwendig, mit der richtigen Spannung zu versehen.

Bei diesem ersten Verfahren, bei welchem dem Generator 7 bei gleicher Drehzahl des Verbrennungsmotors 1 eine Last zugeschaltet wird, erhöht sich durch die Änderung der Last das durch den Keilriemen 4 zu übertragende Drehmoment. Ist der Keilriemen 4 nicht korrekt gespannt, kommt es zu erhöhtem Schlupf. Dadurch ändert sich die Drehzahl des Generators 7. Setzt man nun die bei Last ermittelte Drehzahl des Generators 7 mit der Motordrehzahl mit der ersten Messung ins Verhältnis, wird der Schlupf in Prozent gemessen. Eine Formel zur Berechnung des Schlupfes bei der Änderung der Last sieht wie folgt aus:

$$\left(1 - \frac{Frequenz_{Generator}(Moment1)}{Frequenz_{Generator}(Moment2)}\right) \cdot 100 = Schlupfänderung\,[\%]$$

Bei dem zweiten Auswertungsverfahren, bei dem aufgrund einer Veränderung der Drehzahl am Verbrennungsmotor 1 gearbeitet wird, wird in einem ersten Schritt bei einer festen Last am Generator 7 dessen Drehzahl und die Drehzahl des Verbrennungsmotors 1 gemessen, festgestellt und gespeichert. Dann wird danach bei gleicher fester Last am Generator 7 die Drehzahl des Verbrennungsmotors 1 verändert, insbesondere erhöht. Nun wird in einem zweiten Schritt die Drehzahl sowohl des Generators 7 als auch des Verbrennungsmotors 1 gemessen, festgestellt und gespeichert. In einem dritten Schritt wird aus den beiden Generatordrehzahlen und den Drehzahlen des Verbrennungsmotors 1 der Schlupf in an sich bekannter Weise durch Verhältnisbildung berechnet und das berechnete Ergebnis gegebenenfalls auf der Anzeige 15 angezeigt.

Bei diesem zweiten Verfahren der Variation der Drehzahl wird die Beziehung Leistung = Drehmoment x Drehzahl ausgenutzt. Bei gleicher Abgabeleistung des Generators 7 sinkt das Drehmoment, wenn die Drehzahl erhöht wird. Sinkendes Drehmoment bedeutet weniger Schlupf bzw. mehr Generatordrehzahl. Durch die Verhältnisbildung kann der Schlupf errechnet werden. Eine Formel zur Berechnung des Schlupfes bei der Änderung der Drehzahl sieht wie folgt aus:

$$\left(1 - \frac{f2_{Generator} \cdot n1_{Motor}}{f1_{Generator} \cdot n2_{Motor}}\right) \cdot 100 = Schlupfänderung\,[\%]$$

Bei den beiden angegebenen Formeln für die Schlupfberechnung können statt Frequenzen f auch Drehzahlen n und umgekehrt eingesetzt werden.

Bei der erfindungsgemäßen Anordnung bzw. dem erfindungsgemäßen Verfahren kann die Drehzahl des Generators 7 über die Generatorrestwelligkeit mittels einer Frequenz-Drehzahl-Wandlung gemessen und festgestellt werden, wie dies durch den Frequenz-Drehzahl-Wandler 10 in der Figur angegeben ist. Die Drehzahl des Verbrennungsmotors 1 wird durch einen separaten Drehzahlsensor 8 gemessen und festgestellt. Damit wird der die Vergleichsberechnung zur Bestimmung des Schlupfes durchführende Anordnung 12, das vorzugsweise aus einem Mikroprozessor gebildete Mittel zur Vergleichsberechnung, mit den notwendigen Signalen auf der Leitung 13 bzw. der Leitung 11 versorgt.

Die erfindungsgemäße Anordnung und das erfindungsgemäße Verfahren erlauben es in vorteilhafter Weise auf verschiedenen Möglichkeiten den Schlupf dynamisch und einfach zu messen. Eine solche Messung kann beispielsweise in den Motorabgastest von Kraftfahrzeugen integriert werden. Bei dieser Messung der Keilriemenspannung über den Schlupf erübrigt sich für die Messung die Entfernung von Abdeckungen.

## Patentansprüche

1.  Anordnung zur Ermittlung des Schlupfes bzw. der Keilriemenspannung bei einem Verbrennungsmotor (1), an welchen ein elektrischer Generator (7) über einen Keilriemen (4) antriebsmäßig angekoppelt ist, insbesondere für einen Verbrennungsmotor (1) in einem Kraftfahrzeug,
    dadurch gekennzeichnet, dass

    Mittel (8) zur Feststellung der Drehzahl des Verbrennungsmotors (1) und Mittel (10) zur Feststellung der Drehzahl des Generators (7) vorgesehen sind,
    Mittel zur Vergleichsberechnung (12) vorgesehen sind und Mittel (15) zur Anzeige bzw. Registrierung des ermittelten Schlupfes vorgesehen sind, wobei zur Vergleichsberechnung entweder eine Auswertung aufgrund einer Veränderung der Last am Generator (7) oder einer Veränderung der Drehzahl am Verbrennungsmotor (1) vorgesehen ist.

2.  Anordnung nach Anspruch 1, dadurch gekennzeichnet, dass bei der Auswertung aufgrund von Lastveränderung das Mittel (12) zur Vergleichsberechnung eine erste Auswertung bei einer ersten Last des Generators (7) und eine zweite Auswertung bei einer zweiten Last des Generators (7) durchführt, wobei in beiden Fällen der Verbrennungsmotor (1) gleiche Drehzahl aufweist.

3.  Anordnung nach Anspruch 1, dadurch gekennzeichnet, dass bei der Auswertung aufgrund von Drehzahlveränderung das Mittel (12) zur Vergleichsberechnung eine erste Auswertung bei einer ersten Drehzahl des Verbrennungsmotors (1) und eine zweite Auswertung bei einer zweiten Drehzahl des Verbrennungsmotors (1) durchführt, wobei in beiden Fällen der Generator (7) mit gleicher Last beaufschlagt ist.

4.  Anordnung nach einem der vorigen Ansprüche, dadurch gekennzeichnet, dass als Mittel zur Vergleichsberechnung ein Mikroprozessor (12) vorgesehen ist.

5.  Verfahren zur Ermittlung des Schlupfes bzw. der Keilriemenspannung bei einem Verbrennungsmotor (1), an welchen ein elektrischer Generator (7) über einen Keilriemen (4) antriebsmäßig angekoppelt ist, insbesondere für einen Verbrennungsmotor (1) in einem Kraftfahrzeug,
    dadurch gekennzeichnet, dass eine Vergleichsberechnung durchgeführt wird, welcher entweder eine Auswertung aufgrund einer Veränderung der Last am Generator (7) oder aufgrund einer Veränderung der Drehzahl des Verbrennungsmotors (1) zugrunde liegt.

6.  Verfahren nach Anspruch 5, dadurch gekennzeichnet, dass bei der Auswertung aufgrund einer Veränderung der Last am Generator (7) in einem ersten Schritt bei einer festen Drehzahl des Verbrennungsmotors (1) dessen Drehzahl und die Drehzahl des Generators (7) gemessen, festgestellt und gespeichert wird, dann danach bei gleicher Drehzahl des Verbrennungsmotors (1) dem Generator (7) eine Last zugeschaltet wird und in einem zweiten Schritt die Drehzahl des Generators (7) gemessen, festgestellt und gespeichert wird, in einem dritten Schritt aus den beiden Generatordrehzahlen und der Drehzahl des Verbrennungsmotors (1) der Schlupf in an sich bekannter Weise berechnet und das berechnete Ergebnis ggf. angezeigt wird.

7.  Verfahren nach Anspruch 5, dadurch gekennzeichnet, dass bei der Auswertung aufgrund einer Veränderung der Drehzahl am Verbrennungsmotor (1) in einem ersten Schritt bei einer festen Last am Generator (7) dessen Drehzahl und die Drehzahl des Verbrennungsmotors (1) gemessen, festgestellt und gespeichert wird, dann danach bei gleicher fester Last am Generator (7) die Drehzahl des Verbrennungsmotors (1) verändert, insbesondere erhöht, wird und in einem zweiten Schritt die Drehzahl sowohl des Generators (7) als auch des Verbrennungsmotors (1) gemessen, festgestellt und gespeichert wird, und in einem dritten Schritt aus den beiden Generatordrehzahlen und den Drehzahlen des Verbrennungsmotors (1) der Schlupf in an sich bekannter Weise durch Verhältnisbildung berechnet und das berechnete Ergebnis ggf. angezeigt wird.

8.  Anordnung oder Verfahren nach einem der vorigen Ansprüche,
    dadurch gekennzeichnet, dass die Drehzahl des Generators (7) über die Generatorrestwelligkeit mittels Frequenz-Drehzahl-Wandlung (10) gemessen und festgestellt wird.

9. Anordnung oder Verfahren nach einem der vorigen Ansprüche,
dadurch gekennzeichnet, dass die Drehzahl des Verbrennungsmotors (1) durch einen separaten Drehzahlsensor (8) gemessen und festgestellt wird.

10. Anordnung oder Verfahren nach einem der Ansprüche 1 bis 8,
dadurch gekennzeichnet, dass anstelle der vom Mittel (8) zur Feststellung der Drehzahl des Verbrennungsmotors festgestellten Drehzahl eine Drehzahl des Verbrennungsmotors verwendet wird, welche von der Motorsteuerung bzw. dem Motormanagement des Verbrennungsmotors selbsttätig zur Verfügung gestellt bzw. bei bestimmten Vorgängen eingestellt wird, insbesondere die Leerlaufdrehzahl oder die Abregeldrehzahl oder eine andere bestimmte Referenzdrehzahl.

FIG. 1

**Europäisches Patentamt**

# EUROPÄISCHER RECHERCHENBERICHT

Nummer der Anmeldung

EP 00 12 5946

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 22 01 209 A (BOSCH GMBH ROBERT) 26. Juli 1973 (1973-07-26) * Seite 5, Absatz 4 - Seite 6, Absatz 1; Ansprüche 1-8 * | 1-10 | G01P3/56 G01P3/60 G01L5/10 |
| X | EP 0 086 433 A (SIEMENS AG) 24. August 1983 (1983-08-24) * Seite 4, Absatz 3 - Seite 5, Absatz 3 * | 1-10 | |
| A | US 4 263 578 A (FUKUHARA TAKAO ET AL) 21. April 1981 (1981-04-21) * Zusammenfassung; Anspruch 1 * | 1 | |
| A | EP 0 267 087 A (EQUIP ELECTR MOTEUR) 11. Mai 1988 (1988-05-11) * Zusammenfassung; Ansprüche 1,2 * | 1 | |

RECHERCHIERTE SACHGEBIETE (Int.Cl.7)

G01P
G01L

Der vorliegende Recherchenbericht wurde für alle Patentansprüche erstellt

| Recherchenort | Abschlußdatum der Recherche | Prüfer |
|---|---|---|
| MÜNCHEN | 21. März 2001 | Felicetti, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 12 5946

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-03-2001

| Im Recherchenbericht angeführtes Patentdokument | | | Datum der Veröffentlichung | Mitglied(er) der Patentfamilie | | Datum der Veröffentlichung |
|---|---|---|---|---|---|---|
| DE | 2201209 | A | 26-07-1973 | FR | 2163288 A | 20-07-1973 |
| | | | | GB | 1365054 A | 29-08-1974 |
| | | | | IT | 972940 B | 31-05-1974 |
| EP | 0086433 | A | 24-08-1983 | DE | 3204783 A | 18-08-1983 |
| US | 4263578 | A | 21-04-1981 | JP | 54159977 A | 18-12-1979 |
| | | | | JP | 54160908 A | 20-12-1979 |
| EP | 0267087 | A | 11-05-1988 | FR | 2605110 A | 15-04-1988 |
| | | | | DE | 3768203 D | 04-04-1991 |

EPO FORM P0461

Für nähere Einzelheiten zu diesem Anhang : siehe Amtsblatt des Europäischen Patentamts, Nr.12/82